# EUROPEAN PATENT SPECIFICATION

(11) **EP 1 127 240 B1**
(45) Date of publication and mention of the grant of the patent: **31.08.2005**
(21) Application number: 99947504.9
(22) Date of filing: 05.10.1999
(51) Int. Cl.: F25D 31/00, H04M 11/00

(54) **METHOD AND APPARATUS FOR THE PROCESSING OF FOOD PORTIONS**
VORRICHTUNG UND VERFAHREN ZUR VERARBEITUNG VON NAHRUNGSMITTELPORTIONEN
PROCEDE ET DISPOSITIF POUR LE TRAITEMENT DE RATIONS ALIMENTAIRES

(30) Priority: 05.10.1998 FI 980432 U
(43) Date of publication of application: 29.08.2001
(60) Divisional application: 05012993.1
(73) Proprietor: Penttinen, Jukka, 00830 Helsinki (FI)
(72) Inventor: Penttinen, Jukka, 00830 Helsinki (FI)
(74) Representative: Salomäki, Juha Kari Ensio
(86) International application number: PCT/FI1999/000827
(87) International publication number: WO 2000/020811

(56) References cited:
- EP-A1- 0 782 117
- US-A- 4 398 651
- US-A- 5 233 520
- US-A- 5 797 445
- WALLERIUS ANDERS: 'Styr din egen värld via Internet' NY TEKNIK vol. 48, 1997, pages 40 - 41, XP002958639

## Description

The present invention relates to a method as defined in the preamble of claim 1, and an apparatus as defined in the preamble of claim 3, for the processing of food portions. Such a method and such an apparatus are known, for example, from US-A-4 398 651.

Traditionally, the processing of foodstuffs, especially foodstuffs for the domestic household, consists of making a trip to a grocery, storing the foodstuffs in a refrigerator or a deep-freeze and preparing food e.g. in an oven or a microwave oven. In practice, plenty of time is consumed in collecting foodstuffs, and similarly preparing food from the foodstuffs requires many different devices and appliances which take up a lot of space and, because of their variety, form complex entities that are difficult to maintain, among other things. Moreover, there are many groups of people, such as the old, handicapped and also children, who are unable to prepare a food portion for themselves using current methods and apparatus.

The object of the present invention is to change this traditional way of action by automating the chain of foodstuff processing for the preparation of daily food portions in a manner unknown so far. In this way, the amount of work needed for meals in homes, institutions, such as old-age homes, and in small offices is reduced considerably. Likewise, making food is made easier and will be possible even for people who are unable or unwilling to prepare their own food. To achieve this object, the method according to the invention is characterised by the features defined in the characterisation part of claim 1, and the apparatus according to the invention is characterised by the features defined in the characterisation part of claim 3. Other preferred embodiments of the invention are characterised by what is presented in the other claims.

The solution of the invention has the advantage that it provides an easy and smooth as well as economical and labour-saving and space-saving method for foodstuff supply for in homes, institutions and small offices. This means that old and handicapped people as well as children will find it easy to prepare their food themselves. According to the invention, the preparation of food portions ready to be eaten is accomplished using a single apparatus which comprises spaces for the storage, heating and serving of food portions. Such an integrated apparatus allows easy heating and substantially reduces the work and labour required for the acquisition and preparation of food. The invention described here consists of a method and apparatus by means of which it is possible, depending on the application, to maintain a connection over a telecommunication network, such as an information network or a telephone network, with a supplier of foodstuffs or with some other organisation. The apparatus comprises spaces for cold storage and spaces for heating of food portions. The apparatus is supplied with foodstuffs in suitable amounts e.g. once a week. The foodstuffs are delivered as ready-made frozen food portions, which are stored in the cold spaces in the apparatus. When the user wants a meal, he/she activates the apparatus, whereupon, in accordance with a command given by the user, the apparatus selects the portion, heats it to a suitable temperature and delivers the heated portion on a delivery table provided in the apparatus. The solution of the invention additionally provides the advantage of making it easy to achieve control of nutrition level, so the users can themselves adjust their diet to get healthy food to their liking. A further advantage is that products can be easily identified e.g. using a bar code system.

In the following, the invention will be described in detail by the aid of one of its embodiments with reference to the drawings, wherein
- Fig. 1: presents the apparatus in the form of a block diagram, and
- Fig. 2: presents an apparatus according to the invention in simplified form in an oblique front view.

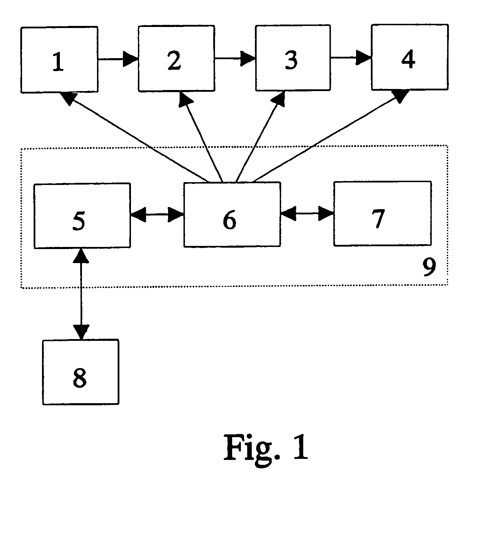

According to Fig. 1, frozen food portions are placed for storage into a cold storage space represented by block 1, which is held at a low temperature suited for the storage of frozen foodstuffs. The regulation of temperature is implemented using refrigerating techniques known in themselves, by applying e.g. the compression or evaporation method. The humidity level in the storage space can also be regulated if necessary. The foodstuffs are packed as complete portions and frozen. In a preferred embodiment of the invention, all food portions in the apparatus are stored at the same temperature. Block 2 represents a transfer mechanism used to transfer the food portion into a heating unit 3 functioning as a cooking compartment. The transfer mechanism may be implemented using technology known in itself. The heating unit represented by block 3 heats the food portion to a uniform temperature suitable for the user by applying resistance heating or microwave heating technology or a combination of these. The heating system may comprise temperature regulation or control of output power and thermal energy to allow desired temperatures to be reached. A serving device, represented by block 4, makes it possible to bring the heated food portion to within the user's reach so as to make it as easy as possible for the user to take out the food portion from the machine. If necessary, the transfer mechanism also works between the heating unit and the serving device.

Block 9 is a data processing section, which comprises a telecommunication unit 5 containing the required data communication functions, a control centre 6 and a user interface 7. With present-day technology, the data processing section 9 can be implemented using a microcomputer. The microcomputer used may be a separate computer in the home or it may be a computer integrated with the apparatus of the invention. In the case of a separate computer, the apparatus comprises means for connecting the computer to the apparatus.

The telecommunication part of the system is implemented e.g. using an Internet connection via a telephone network 8. Telecommunication can be applied for ordering new foodstuffs from a foodstuff supplier. This function may be automated so that a new order is sent when the amount of foodstuffs falls below a set minimum. Ordering can also be effected manually, in which case the user defines via the microcomputer user interface the quantity and quality of foodstuffs to be delivered. The network connection can also be used to transmit information regarding possible faults in the apparatus as well as for sending a notification when the apparatus is about to run out of foodstuffs, and it can also be used for remote activation of the apparatus e.g. to select a food portion and to start heating. The remote activation is specially good for the old people or handicapped people who cannot use the device alone. They can still live at home and the device is switched on via the remote activation in order to prepare a warm meal for them. For remote activation, it is also possible to use another microcomputer, through which the user can additionally see the number of food portions in the home or the like as well as the content of the portions. The remote activation can be used also for monitoring the functions of the apparatus. For instance to check what kind of food portions there are in the apparatus, or when the apparatus has been used, and to perform a fault diagnosis, etc. Information can be stored into the main frame computers of the telecommunication network or into the server computers. The storage is done via the telecommunication network. This is useful for foodstuff suppliers who can avoid investing to big computer solutions in their own offices. Instead they can use inexpensive computer solutions.

Furthermore, a microcomputer provides a possibility for controlling the amounts and quality of nutriments in the foodstuffs, either automatically or by guiding the user. Control of nutrition level is easy to implement, so that when the user needs a diet, the computer will take care of realising it.

Block 6 is a control centre and it functions as a controller of the automation of the apparatus. In modern computers, it is possible to add electronic circuit boards providing input and output connections for the control of other devices. Connections are provided from the control centre 6 to the food portion storage unit 1, to the transfer mechanism 2, to the heating unit 3 and to the serving device 4. The control centre 6 is further connected to the telecommunication unit 5 and to the user interface 7. The user interface represented by block 7 can be implemented with facilities feasible in conjunction with the electronics, microcomputer or alike. These include e.g. a keyboard, a mouse and a touch-sensitive display screen as well as communication by speech.

Another very handy user interface is one based on cards or discs provided with illustrations of food portions. In this case, for instance, one side of the card is provided with a picture and/or designation of the food portion and the same side or the opposite side is provided with an identification marking based on bar code, magnetic stripe or equivalent, representing the same food portion. When the user inserts a card representing the desired food portion into the user interface of the apparatus, the apparatus will read the identification marking, prepare the food portion and mark the portion as consumed.

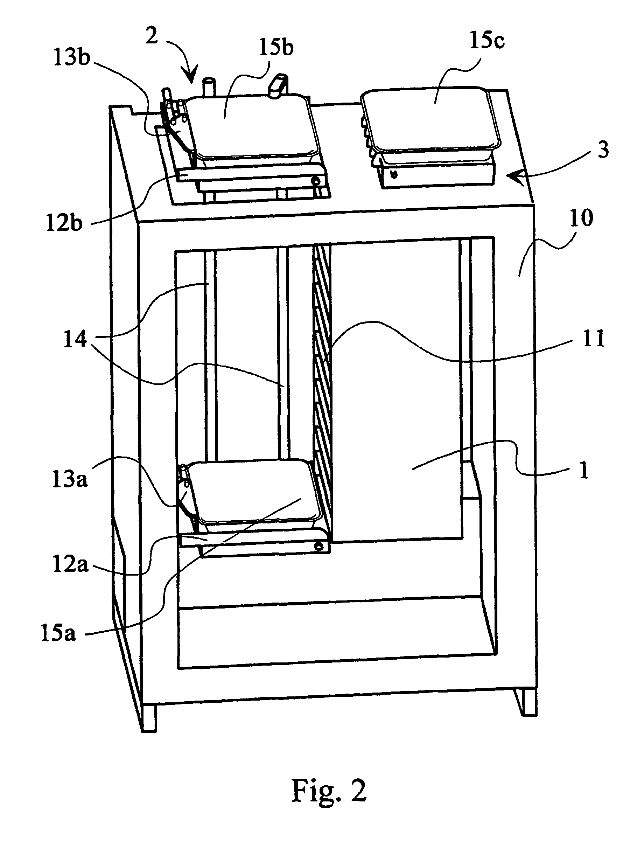

Fig. 2 illustrates the mechanical structure of an apparatus according to the invention, in a simplified form and in an oblique front view. In the figure, the cover part normally placed on the top of the apparatus and the heating unit that may be comprised in it as well as the door in the front wall of the apparatus have been omitted. The apparatus comprises a frame part 10, the interior of which comprises a cold storage space 1 with storage boxes 11 for packaged food portions 15. Mounted next to the cold storage space is a transfer mechanism 2, which comprises a transfer device 12, 13 for taking a food portion 15 from a storage box 11 and hoist guides 14 for hoisting the transfer device from the cold storage space to the upper part of the apparatus. Moreover, the upper part of the apparatus is provided with a heating unit 3, from which the user can take the food portion when it is ready to be eaten. The transfer device comprises a transfer pan 12, onto which the food portion is moved from the storage box 11, and a transfer gear 13, which is used to take the food portion out of the storage box 11 and also to move it to the heating unit 3 in the upper part of the apparatus.

Fig. 2 shows the same food portion package 15 at three different stages and the position of the transfer device 12 at two different stages. At the first stage, the food portion 15 has just been taken from the storage box onto the transfer device 12a; at the second stage, the food portion 15b is lying on the transfer device 12b just before being moved into the heating unit; and at the third stage, the food portion 15c is in the heating unit 3.

The products are identified on the basis of a bar code system or a magnetic stripe or equivalent, which has the advantage of definite markings that allow the system of the invention to reliably identify the foodstuffs brought into the apparatus. Based on an order, the foodstuffs are delivered directly into the apparatus from a delivery van of a food supply company or some other service organisation. In the home, the apparatus is placed in a suitable location, e.g. in the kitchen, as a stand-alone appliance or built in kitchen fittings, such as a work table. The small dimensions of the apparatus also allow it to be placed in a vestibule or living room.

The user can regularly observe his/her nutrient supply, consumption habits, costs and other related matters by the information accumulated in a database in the apparatus, and if desired, reports can be printed out on a printer connected to the apparatus.

It is obvious to the person skilled in the art that the invention is not restricted to the examples described above but that it may be varied within the scope of the claims presented below. Thus, a preferred embodiment of the invention may be so implemented that the food portion is not moved but instead the temperature in its storage box is changed during the heating of the food portion. This embodiment comprises no transfer mechanism. The storage space may also be divided into separate boxes. When the storage space has been divided into boxes, it will be possible to store different food portions in different conditions regarding temperature and humidity. In this case, each box is adjusted separately if necessary. The operation may also be such that the final portion consists of several subportions, which are processed by the apparatus by turns. In this case, no ready-made food portions are needed, but the components are stored in separate storage spaces, from where the apparatus only collects them and prepares a food portion at heating time. The apparatus may also be so located that the deliverer of fresh supplies can place the foodstuffs into the apparatus using his own key, yet without having to enter the building. In this case, the apparatus is provided with a back door which opens directly to the outside of the building.

## Claims

1. Method for the processing of food portions (15), in which method the food portions are delivered to a single apparatus situated by a user and comprising at least a cold storage space (1), a heating unit (3) and a space for serving the food portions; and in which method the food portion wanted each time is moved from the cold storage space (1) in connection with the activation of the heating phase to the heating unit (3) where the food portion (15) is heated, after which the food portion is ready for serving; and in which method the single apparatus is connected to a telecommunication network or alike, **characterized in that** when needed the telecommunication network is used to perform the remote activation of the selection of the food portion and the heating of the food portion.

2. Method as defined in claim 1, **characterized in that** the order for new food portions is done over the telecommunication network.

3. Apparatus for the processing of food portions (15), said apparatus comprising at least a cold storage space (1) for the storage of food portions, a heating unit (3), a space for serving the food portions, a control centre (6),a user interface (7) and a telecommunication unit (5) for connection to a telecommunication network or alike, where at least the cold storage space (1), the heating unit (3) and the space for serving the food portions are integrated into a single assembly which has been arranged to be controlled by means of the control centre (6) and the user interface (7), **characterized in that** the apparatus comprises means in order to perform the remote activation over the telecommunication network of the selection of the food portion and the heating of the food portion.

4. Apparatus as defined in claim 3, **characterized in that** the telecommunication unit (5) serves to provide communication with a supplier of food portions, a failure data monitoring party or equivalent.

5. Apparatus as defined in claim 3 or 4, **characterized in that** the apparatus comprises a transfer mechanism (2), which has been arranged to transfer food portions from the cold storage place (1) into the heating unit (3) and, if necessary, further to a serving device (4).

6. Apparatus as defined in claim 3, 4 or 5, **characterized in that** the apparatus comprises a data processing section (9), which has been arranged to function as a supervising element storing and distributing information and activating the functions of the apparatus.

7. Apparatus as defined in any one of the preceding apparatus claims, **characterized in that** the telecommunication network, over which the ordering of food portions, remote operation of the apparatus, transmission of failure information, etc. have been arranged to be effected, is a telephone network or internet (8) network.

8. Apparatus as defined in any one of the preceding apparatus claims, **characterized in that** the apparatus comprises a system for controlling the user's nutrition level and diet.

## Patentansprüche

1. Verfahren zur Verarbeitung von Nahrungsmittelportionen (15), in welchem Verfahren die Nahrungsmittelportionen an eine einzelne, von einer Anwenderperson platzierte Vorrichtung geliefert werden, die zumindest einen Kühllagerraum (1), eine Heizeinheit (3) und einen Raum zur Ausgabe der Nahrungsmittelportionen aufweist; in welchem Verfahren die angeforderte Nahrungsmittelportion jedesmal von dem Kühllagerraum (1) in Verbindung mit der Aktivierung der Aufwärmphase an die Heizeinheit (3) gebracht wird, wo die Nahrungsmittelportion (15) erwärmt wird, wonach die Nahrungsmittelportion zur Ausgabe bereitsteht; und in welchem Verfahren die einzelne Vorrichtung an ein Telekommunikations-Netzwerk oder dergleichen angeschlossen ist,
**dadurch gekennzeichnet, dass** das Telekommunikations-Netzwerk bei Bedarf zur Ausführung einer ferngesteuerten Aktivierung betreffend die Auswahl der Nahrungsmittelportion und das Erwärmen der Nahrungsmittelportion verwendet wird.

2. Verfahren nach Anspruch 1,
**dadurch gekennzeichnet, dass** die Anfrage nach neuen Nahrungsmittelportionen mittels des Telekommunikations-Netzwerkes abgegeben wird.

3. Vorrichtung zur Verarbeitung von Nahrungsmittelportionen (15), welche Vorrichtung mindestens einen Kühllagetraum (1) zur Lagerung von Nahrungsmittelportionen, eine Heizeinheit (3), einen Raum zur Ausgabe der Nahrungsmittelportionen, ein Steuerzentrum (6), eine Anwenderschnittstelle (7) und eine Telekommunikationseinheit (5) für den Anschluss an ein Telekommunikations-Netzwerk oder dergleichen aufweist, wobei zumindest der Kühllagetraum (1), die Heizeinheit (3) und der Raum zur Ausgabe der Nahrungsmittelportionen in einer einzelnen Baueinheit integriert sind, die dazu bestimmt ist, mittels des Steuerzentrums (6) und der Anwenderschnittstelle (7) gesteuert zu werden,
**dadurch gekennzeichnet, dass** die Vorrichtung Mittel umfasst, um die ferngesteuerte Aktivierung mit Hilfe des Telekommunkations-Netzwerks zur Auswahl der Nahrungsmittelportion und zum Erwärmen der Nahrungsmittelportion auszuführen.

4. Vorrichtung nach Anspruch 3,
**dadurch gekennzeichnet, dass** die Telekommunikationseinheit (5) dazu dient, eine Kommunikation mit einem Zulieferer von Nahrungsmittelportionen, mit einer zur Überwachung von Fehldaten bestimmten Partei oder entsprechendem bereitzustellen.

5. Vorrichtung nach Anspruch 3 oder 4,
**dadurch gekennzeichnet, dass** die Vorrichtung einen Übertragungsmechanismus (2) aufweist, der dazu angeordnet ist, Nahrungsmittelportionen von dem Kühllagerraum (1) in die Heizeinheit (3) und bei Bedarf weiter an eine Ausgabevorrichtung (4) zu befördern.

6. Vorrichtung nach Anspruch 3, 4 oder 5,
**dadurch gekennzeichnet, dass** die Vorrichtung eine Datenverarbeitungs-Sektion (9) aufweist, deren Funktion es ist, als ein Überwachungselement zur Speicherung und Verteilung von Informationen sowie zur Aktivierung der Funktionen der Vorrichtung zu dienen.

7. Vorrichtung nach einem der vorangehenden Ansprüche,
**dadurch gekennzeichnet, dass** das Telekommunikations-Netzwerk, über das die Bestellung von Nahrungsmirtelportionen, die Fernsteuerung der Vorrichtung, die Übertragung einer Fehlinformation etc, läuft, dergestalt ist, dass diese über ein Telefonnetzwerk oder Internet (8) - Netzwerk vollzogen werden.

8. Vorrichtung nach einem der vorangehenden Ansprüche,
**dadurch gekennzeichnet, dass** die Vorrichtung ein System zur Steuerung des Nahrungsangebotes, bzw. des Kalorienhaushaltes und einer Diät einer Anwenderperson umfasst.

## Revendications

1. Procédé destiné au traitement de rations alimentaires (15), dans lequel les rations alimentaires sont livrées à un appareil unique situé par un utilisateur et comprenant au moins un espace d'entreposage frigorifique (1), une unité de chauffage (3) et un espace destiné à servir les rations alimentaires ; et dans lequel procédé la ration alimentaire souhaitée à chaque fois est enlevée de l'espace d'entreposage frigorifique (1) en connexion avec l'activation de la phase de chauffage sur l'unité de chauffage (3) où la ration alimentaire (15) est chauffée, après quoi la ration alimentaire est prête à être servie ; et dans lequel procédé l'appareil unique est raccordé à un réseau de télécommunication ou similaire, **caractérisé en ce que** si nécessaire le réseau de télécommunication est utilisé pour exécuter la mise en service à distance de la sélection de la ration alimentaire et du chauffage de la ration alimentaire.

2. Procédé selon la revendication 1, **caractérisé en ce que** la commande de nouvelles rations alimentaires est effectuée sur le réseau de télécommunication.

3. Appareil destiné au traitement de rations alimentaires (15), ledit appareil comprenant au moins un espace d'entreposage frigorifique (1) pour l'entreposage de rations alimentaires, une unité de chauffage (3), un espace destiné à servir les rations alimentaires, un centre de commande (6), une interface utilisateur (7) et une unité de télécommunication (5) pour la connexion à un réseau de télécommunication ou similaire, dans lequel au moins l'espace d'entreposage frigorifique (1), l'unité de chauffage (3) et l'espace destiné à servir les rations alimentaires sont intégrés dans un seul assemblage qui a été agencé pour être commandé au moyen du centre de commande (6) et l'interface utilisateur (7), **caractérisé en ce que** l'appareil comprend des moyens afin d'exécuter la mise en service à distance sur le réseau de télécommunication de la sélection de la ration alimentaire et du chauffage de la ration alimentaire.

4. Appareil selon la revendication 3, **caractérisé en ce que** l'unité de télécommunication (5) sert à établir la communication avec un fournisseur de rations alimentaires, une partie de surveillance des données de panne ou un équivalent.

5. Appareil selon la revendication 3 ou 4, **caractérisé en ce que** l'appareil comprend un mécanisme de transfert (2), qui est agencé pour transférer des rations alimentaires à partir de l'espace d'entreposage frigorifique (1) dans l'unité de chauffage (3) et, si nécessaire, également vers un dispositif de desserte (4).

6. Appareil selon la revendication 3, 4 ou 5, **caractérisé en ce que** l'appareil comprend une section de traitement des données (9), qui est agencée pour fonctionner en tant qu'élément de supervision stockant et distribuant des informations et activant les fonctions de l'appareil.

7. Appareil selon l'une quelconque des revendications précédentes de l'appareil, **caractérisé en ce que** le réseau de télécommunication, sur lequel la mise en séquence des rations alimentaires, l'opération distante de l'appareil, la transmission des informations de panne, etc. ont été agencées pour être effectuées, est un réseau téléphonique ou Internet (8).

8. Appareil selon l'une quelconque des revendications précédentes, **caractérisé en ce que** l'appareil comprend un système destiné à commander le niveau de nutrition et le régime de l'utilisateur.
